# EUROPEAN PATENT APPLICATION

(11) **EP 2 874 360 A1**
(43) Date of publication of application: **20.05.2015**
(21) Application number: 13831264.0
(22) Date of filing: 22.08.2013
(51) Int. Cl.: H04L 12/735

(54) **CROSS-DOMAIN DISJOINT PATH COMPUTATION METHOD, PATH COMPUTATION ELEMENT AND COMMUNICATION SYSTEM**

(30) Priority: 23.08.2012 CN 201210302832
(71) Applicant: ZTE Corporation, Shenzhen, Guangdong 518057 (CN)
(72) Inventor: LU, Gang, Shenzhen Guangdong 518057 (CN); LI, Xiaojian, Shenzhen Guangdong 518057 (CN); ZHANG, Chengxing, Shenzhen Guangdong 518057 (CN)
(74) Representative: Willquist, Sofia Ellinor
(86) International application number: PCT/CN2013/082089
(87) International publication number: WO 2014/029350

(57) **Abstract**

A method, a Path Computation Element (PCE) and a communication system for inter-domain disjoint path computation are disclosed. The method includes: in a sequential computation process of a inter-domain disjoint path, if a disjoint path computation of a current domain fails, in a condition of not changing an ingress boundary node and an egress boundary node within an original path domain, the path computation element of the current domain adjusting a path within the original path domain as a suboptimal path, and recomputing a disjoint path corresponding to the adjusted suboptimal path within the original path domain. With the above method, PCE and communication system, based on the existing sequential computation method for the inter-domain path, a suboptimal adjustment is conducted on path segments (including nodes and links) within the original path domain, thereby greatly improving a success rate of computing the disjoint path during the inter-domain disjoint path computation.

## Description

### Technical Field

The present invention relates to the communication field, and specifically, to a method for inter-domain disjoint path computation, a path computation element and a communication system.

### Background of the Related Art

In multi-layer and multi-domain networks using the Generalized Multiprotocol Label Switching (GMPLS) protocol, various nodes with different switching capacities and rates can be divided into different domains or layers, these domains can be router domains, Optical Transport Network (OTN) domains or Packet Transport Network (PTN) domains and so on. In the multi-domain networks divided according to an Autonomous System (AS), inter-domain path computation can be performed with various inter-domain path computation methods by using a Path Computation Element (PCE).

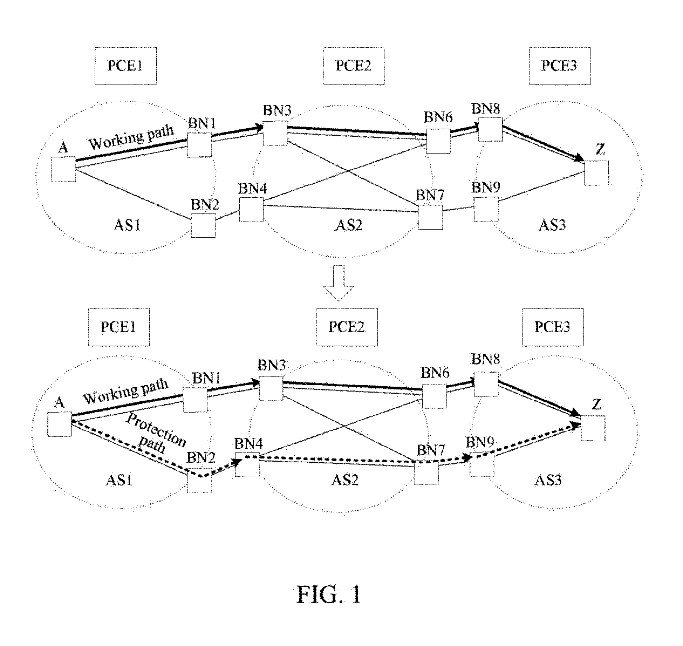

In the inter-domain path computation process, in order to enhance the usability of backup paths, it is required to compute backup paths which are completely disjointed from the original path nodes, links and Share Risk Link Group (SRLG) and so on, that is, the nodes and links that all the paths go through are completely different with each other. Moreover, the concept of SRLG is also introduced, that is, with respect to certain links, though they are not coincident when seen in the routing topology, they may have the same risk of failure (e.g., they are in the same optical fiber), once a fault occurs, they will become invalid simultaneously, thus it is also required to guarantee that links with the same SRLG value as that of the original path links should not exist in the backup paths. Two basic methods for inter-domain disjoint path computation are put forward in the RFC5298, one is Sequential path computation method, and one is Simultaneous path computation method. With respect to the sequential computation method, it means that it is unnecessary to consider a disjoint path (such as a protection path and a recovery path, etc.) when an end-to-end working path is computed, and after the end-to-end original path (such as the working path) is completely computed, it starts to compute the disjoint path, as shown in FIG. 1, three domains AS1, AS2 and AS3 and three PCEs (PCE1, PCE2, PCE3) are given, BN1∼BN9 are boundary nodes of the various domains, A is a source node, Z is a destination node, the computation process is as follows: firstly each domain sequentially computing an original path within itself, and eventually generating an end-to-end original path from A to Z as shown by a solid line in FIG. 1, then taking the computed end-to-end original path from A to Z as a disjoint condition, each domain starting to sequentially compute a disjoint path within itself, and eventually generating an end-to-end disjoint path from A to Z as shown by a dotted line in FIG. 1.

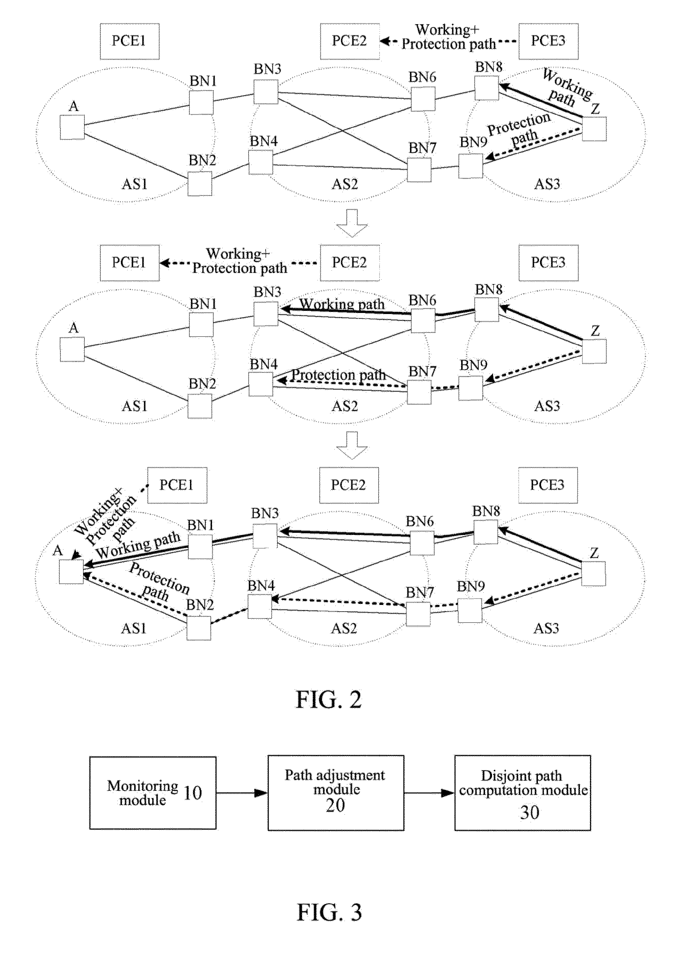

With respect to the simultaneous computation method, it means that the end-to-end original path (such as the working path) and the disjoint path (such as a protection path and a recovery path, etc.) are simultaneously computed at an ingress of each domain, and a head node obtains the original path and the disjoint path simultaneously in the end, as shown in FIG. 2, the computation process with the Backward Recursive Path Computation (BRPC) method is as follows: firstly the PCE3 simultaneously computing an original path and a disjoint path within the AS3 domain, and reporting all computed alternate path results (multiple alternate paths from all ingress boundary nodes of AS3 to Z) to the PCE2, then the PCE2 simultaneously computing an original path and a disjoint path within the AS2 domain, and reporting newly generated alternate path results (multiple alternate paths from all ingress boundary nodes of AS2 to Z) to the PCE1, then the PCE1 simultaneously computing an original path and a disjoint path within the AS1 domain, and eventually selecting an optimal end-to-end original path and an optimal end-to-end disjoint path from the multiple pairs of alternate paths (multiple alternate paths from A to Z), and reporting the optimal path computation results to the head node A, wherein, the solid line represents the original path, and the dotted line represents the disjoint path.

In the multi-domain path computation process, if there is no mutual trust between the domains, it is required to hide its own internal path information from other domains, that is, path secrecy is needed. A concept of secret path is put forward in the RFC5520, and it is implemented by a PathKey mechanism. When the PCE computes a segment of path within the domain, the PathKey can be used to replace a particular intra-domain path. In the signaling establishment process, when reaching an ingress boundary node, the ingress boundary node then requests the corresponding PCE for acquiring an intra-domain path corresponding to the PathKey, so as to complete signaling routing.

With respect to the sequential computation method for the inter-domain disjoint path, it is comparatively acknowledged at present, and it is also a more easily implemented method for computing the inter-domain disjoint path. But the method still has certain defects, and it will influence the success rate of the disjoint path computation. When the inter-domain disjoint path is computed, since the inter-domain original path has been established, nodes and links of the original path have been all determined in each domain. In this case, when the disjoint path is computed, according to a disjoint path computation principle, it is required to disjoint from all nodes, links and SRLG on the original path, that is, disjoint demand needs to be met when the disjoint path is computed. However, due to certain limitations, for example, the nodes or links selected during the original path computation are unreasonable, it will cause that a disjoint path completely disjointed from the nodes, links and SRLG of the original path cannot be computed out within one domain, thereby leading to a failure of the whole inter-domain disjoint path computation. And with regard to such failure, since the original path has been determined and it cannot be changed, there is no good solution at the moment. While with respect to the simultaneous computation method, even though the success rate problem of the disjoint path computation appearing in the sequential computation will be improved to a certain extent in theory, the implementation difficulty is still too great at present, which is not realistic.

### Summary of the Invention

The technical problem required to be solved by the example of the present invention is to provide a method for inter-domain disjoint path computation, a path computation element and a communication system, to improve a success rate of the disjoint path computation in the inter-domain disjoint path computation.

In order to solve the above technical problem, the example of the present invention provides a method for inter-domain disjoint path computation, which comprises:
in a sequential computation process of a inter-domain disjoint path, if a disjoint path computation of a current domain fails, in a condition of not changing an ingress boundary node and an egress boundary node within an original path domain, a Path Computation Element (PCE) of the current domain adjusting a path within the original path domain as a suboptimal path, and recomputing a disjoint path corresponding to the adjusted suboptimal path within the original path domain.

Preferably, recomputing the disjoint path corresponding to the adjusted suboptimal path within the original path domain comprises:
taking the adjusted suboptimal path within the original path domain as a disjoint condition, and computing a disjoint path meeting a disjoint demand within a preset suboptimal priority threshold range with a suboptimal path algorithm.

Preferably, the PCE adjusting the path within the original path domain as the suboptimal path, and recomputing the disjoint path corresponding to the adjusted suboptimal path within the original path domain specifically comprises:
the PCE adjusting the path within the original path domain as a k1th suboptimal path, wherein k1=2; and computing a disjoint path corresponding to the k1th suboptimal path;
computing the disjoint path meeting the disjoint demand with the suboptimal path algorithm comprises: starting to compute a disjoint path from a suboptimal priority k2=1, if the computation fails, continuing to compute disjoint paths of suboptimal priorities k2=2, 3, ......, K until a disjoint path meeting the disjoint demand is computed out; wherein K is a preset suboptimal priority threshold value and is a positive integer; and
if the computation still fails, taking k1=3, 4, ......, K, computing a disjoint path corresponding to the k1th suboptimal path, and repeating the above step of computing the disjoint paths until the disjoint path meeting the disjoint demand is computed out.

Preferably, the method further comprises:
after the disjoint path computation of the current domain succeeds, the PCE of the current domain carrying a disjoint path computation result and the adjusted suboptimal path within the original path domain to a head domain via a PCE of an upstream domain through a path computation response; and
after receiving the path computation response, a PCE of the head domain updating an intra-domain path of an original path as the adjusted suboptimal path within the original path domain, and saving an intra-domain disjoint path of an end-to-end disjoint path as the disjoint path computation result.

Preferably, if the original path of the current domain adopts a secret path, pathkey1, the method further comprises:
when computing the disjoint path corresponding to the adjusted suboptimal path within the original path domain, the PCE of the current domain re-generating a new PathKey object pathkey1' for the adjusted suboptimal path within the original path domain, and generating a PathKey object pathkey2 for the computed disjoint path;
then the PCE of the current domain carrying the disjoint path computation result pathkey2 and the pathkey1' of the adjusted suboptimal path within the original path domain to the head domain via a PCE of an upstream domain through a path computation response; and
after receiving the path computation response, the PCE of the head domain updating the intra-domain path of the original path as the pathkey1', and saving the intra-domain disjoint path of the end-to-end disjoint path as the pathkey2.

Preferably, if the original path of the current domain adopts a secret path pathkey1, the method further comprises:
when computing the disjoint path corresponding to the adjusted suboptimal path within the original path domain, the PCE of the current domain updating a PathKey of the adjusted suboptimal path within the original path domain as the pathkey1, and generating a PathKey object pathkey2 for the computed disjoint path;
then the PCE of the current domain carrying the disjoint path computation result pathkey2 to the head domain via a PCE of an upstream domain through a path computation response; and
after receiving the path computation response, the PCE of the head domain saving the intra-domain disjoint path of the end-to-end disjoint path as the pathkey2.

In order to solve the above technical problem, the example of the present invention further provides a path computation element for a inter-domain disjoint path, which comprises:
a monitoring module, configured to: in a sequential computation process of the inter-domain disjoint path, monitor whether a disjoint path computation of a current domain fails, and if yes, notify a path adjustment module;
the path adjustment module, configured to: after receiving a notification from the monitoring module, in a condition of not changing an ingress boundary node and an egress boundary node within an original path domain, adjust a path within the original path domain as a suboptimal path; and
a disjoint path computation module, configured to: recompute a disjoint path corresponding to the adjusted suboptimal path within the original path domain.

Preferably, the disjoint path computation module being configured to recompute the disjoint path corresponding to the adjusted suboptimal path within the original path domain comprises:
taking the adjusted suboptimal path within the original path domain as a disjoint condition, and computing a disjoint path meeting a disjoint demand within a preset suboptimal priority threshold range with a suboptimal path algorithm.

Preferably, the path adjustment module being configured to adjust the path within the original path domain as the suboptimal path comprises:
adjusting the path within the original path domain as a k1th suboptimal path, wherein k1=2; notifying the disjoint path computation module to compute a disjoint path corresponding to the k1=2nd suboptimal path; if a computation failure response returned by the disjoint path computation module is received, taking k1=3, 4, ......, K, and notifying the disjoint path computation module to compute disjoint paths corresponding to the k1=3, 4, ......, Kth suboptimal paths until a disjoint path meeting the disjoint demand is computed out, wherein, K is a preset suboptimal priority threshold value and is a positive integer; and
the disjoint path computation module being configured to compute the disjoint path corresponding to the k1th suboptimal path after receiving a notification from the path adjustment module comprises:
   computing the disjoint path meeting the disjoint demand with the suboptimal path algorithm, comprising: starting to compute a disjoint path from a suboptimal priority k2=1, if the computation fails, continuing to compute disjoint paths of suboptimal priorities k2=2, 3, ......, K, and if the computation still fails, returning a computation failure response to the path adjustment module.

Preferably, the path computation element further comprises:
a path reporting module, configured to: after the disjoint path computation of the current domain succeeds, carry a disjoint path computation result and the adjusted suboptimal path within the original path domain to a head domain via a path computation element PCE of an upstream domain through a path computation response; and
a path update module, configured to: after receiving the path computation response in the head domain, update an intra-domain path of an original path as the adjusted suboptimal path within the original path domain, and save an intra-domain disjoint path of an end-to-end disjoint path as the disjoint path computation result.

Preferably, the path reporting module is further configured to: if the original path of the current domain adopts a secret path pathkey1, when computing the disjoint path corresponding to the adjusted suboptimal path within the original path domain in the current domain, re-generate a new PathKey object pathkey1' for the adjusted suboptimal path within the original path domain, and generate a PathKey object pathkey2 for the computed disjoint path; then carry the disjoint path computation result pathkey2 and the pathkey1' of the adjusted suboptimal path within the original path domain to the head domain via a path computation element PCE of an upstream domain through a path computation response; and
the path update module is further configured to: after receiving the path computation response in the head domain, change the intra-domain path of the original path from the pathkey1 to the pathkey1', and save the intra-domain disjoint path of the end-to-end disjoint path as the pathkey2.

Preferably, the path reporting module is further configured to: if the original path of the current domain adopts a secret path, pathkey1, when computing the disjoint path corresponding to the adjusted suboptimal path within the original path domain in the current domain, update the adjusted suboptimal path within the original path domain to the pathkey1, and generate a PathKey object pathkey2 for the computed disjoint path; and then carry the disjoint path computation result pathkey2 to the head domain via a path computation element PCE of an upstream domain through a path computation response; and
the path update module is further configured to: after receiving the path computation response in the head domain, save the intra-domain disjoint path of the end-to-end disjoint path as the pathkey2.

In order to solve the above technical problem, the example of the present invention further provides a communication system, which comprises: two or more than two Autonomous System (AS) domains and path computation elements for a inter-domain disjoint path as mentioned above, wherein, each AS domain has one path computation element.

Compared with the related art, with the method, path computation element and communication system for inter-domain disjoint path computation provided in the example of the present invention, based on the existing sequential computation method for the inter-domain path, a suboptimal adjustment is conducted on path segments (including nodes and links) within the original path domain, thereby greatly improving a success rate of computing the disjoint path during the inter-domain disjoint path computation.

### Brief Description of Drawings

FIG. 1 is a schematic diagram of a method for sequentially computing the inter-domain disjoint path in the related art.
FIG. 2 is a schematic diagram of a method for synchronously computing the inter-domain disjoint path in the related art.
FIG. 3 is a structural diagram of a path computation element for the inter-domain disjoint path in the example.
FIG. 4 is a flow diagram of a method for computing the inter-domain disjoint path in the example.
FIG. 5 is a structural diagram of a communication system in an application example.
FIG. 6 is a flow diagram of a method for computing an AS(i) inter-domain disjoint path in an application example.
FIG. 7 is a schematic diagram of a sequential computation process of the disjoint path based on BRPC in an application example.
FIG. 8 is a schematic diagram of a sequential computation process of the disjoint path based on BRPC in an application example.
FIG. 9 is a schematic diagram of a sequential computation process of the disjoint path based on BRPC in an application example.

### Preferred Embodiments of the Invention

In order to make the object, technical scheme and advantages of the present invention more clear, the examples of the present invention will be described in detail in combination with the accompanying drawings below. It should be noted that the examples in the present invention and the characteristics in the examples can be optionally combined with each other in the condition of no conflict.

### Examples

As shown in FIG. 3, the example provides a path computation element PCE for a inter-domain disjoint path, which includes:
a monitoring module 10, configured to: in a sequential computation process of the inter-domain disjoint path, monitor whether a disjoint path computation of the current domain fails, and if yes, notify a path adjustment module;
a path adjustment module 20, configured to: after receiving a notification from the monitoring module, in a condition of not changing an ingress boundary node and an egress boundary node within an original path domain, adjust a path within the original path domain as a suboptimal path; and
a disjoint path computation module 30, configured to: recompute a disjoint path corresponding to the adjusted suboptimal path within the original path domain.

Wherein, the disjoint path computation module takes the adjusted suboptimal path within the original path domain as a disjoint condition, and computes a disjoint path meeting a disjoint demand within a preset suboptimal priority threshold range with a suboptimal path algorithm.

In an application example, specifically,
the path adjustment module being configured to adjust the path within the original path domain as the suboptimal path includes:
adjusting the path within the original path domain as a k1th suboptimal path, wherein k1=2; notifying the disjoint path computation module to compute a disjoint path corresponding to the k1=2nd suboptimal path; if a computation failure response returned by the disjoint path computation module is received, taking k1=3, 4, ......, K, and notifying the disjoint path computation module to compute disjoint paths corresponding to the k1=3, 4, ......, Kth suboptimal paths until a disjoint path meeting the disjoint demand is computed out, wherein, K is a preset suboptimal priority threshold value and a positive integer; and
the disjoint path computation module being configured to compute the disjoint path corresponding to the k1th suboptimal path after receiving the notification from the path adjustment module includes:
   computing the disjoint path meeting the disjoint demand with the suboptimal path algorithm, comprising: starting to compute a disjoint path from a suboptimal priority k2=1, if the computation fails, continuing to compute disjoint paths of suboptimal priorities k2=2, 3, ......, K, and if the computation still fails, returning a computation failure response to the path adjustment module.

In addition, as a preferred way, the path computation element also includes:
a path reporting module, configured to: after the disjoint path computation of the current domain succeeds, carry a disjoint path computation result and the adjusted suboptimal path within the original path domain to a head domain via a PCE of an upstream domain through a path computation response; and
a path update module, configured to: after receiving the path computation response in the head domain, update an intra-domain path of an original path as the adjusted suboptimal path within the original path domain, and save an intra-domain disjoint path of an end-to-end disjoint path as the disjoint path computation result.
the path reporting module is further configured to: if the original path of the current domain adopts a secret path pathkey1, when computing the disjoint path corresponding to the adjusted suboptimal path within the original path domain in the current domain, re-generate a new PathKey object pathkey1' for the adjusted suboptimal path within the original path domain, and generate a PathKey object pathkey2 for the computed disjoint path; then carry the disjoint path computation result pathkey2 and the pathkey1' of the adjusted suboptimal path within the original path domain to the head domain via a PCE of an upstream domain through a path computation response; and
the path update module is further configured to: after receiving the path computation response in the head domain, change the intra-domain path of the original path from the pathkey1 to the pathkey1', and save the intra-domain disjoint path of the end-to-end disjoint path as the pathkey2.
the path reporting module is further configured to: if the original path of the current domain adopts a secret path pathkey1, when computing the disjoint path corresponding to the adjusted suboptimal path within the original path domain in the current domain, update a PathKey of the adjusted suboptimal path within the original path domain as the pathkey1, and generate a PathKey object pathkey2 for the computed disjoint path; and then carry the disjoint path computation result pathkey2 to the head domain via a PCE of an upstream domain through a path computation response; and
the path update module is further configured to: after receiving the path computation response in the head domain, save the intra-domain disjoint path of the end-to-end disjoint path as the pathkey2.

Moreover, the example also provides a communication system, which includes: two or more than two Autonomous System (AS) domains and PCEs for the inter-domain disjoint path as mentioned above; each AS domain has one PCE.

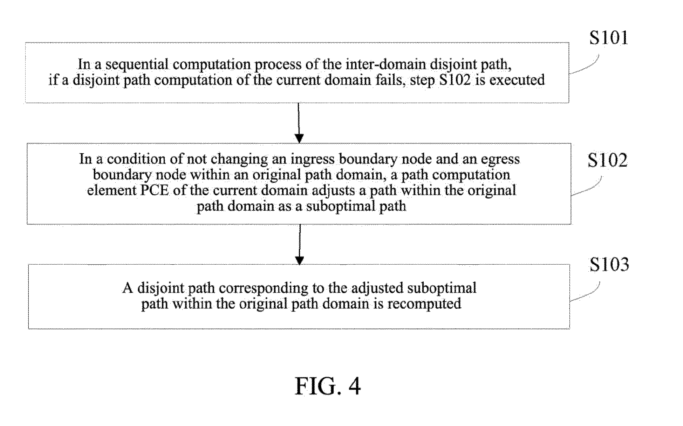

As shown in FIG. 4, the example provides a method for inter-domain disjoint path computation, which is applied to a PCE; and the following steps are included.

In step S101, in a sequential computation process of the inter-domain disjoint path, if a disjoint path computation of the current domain fails, step S102 is executed, otherwise the inter-domain disjoint path computation succeeds.

In step S102, in a condition of not changing an ingress boundary node and an egress boundary node within an original path domain, a path computation element PCE of the current domain adjusts a path within the original path domain as a suboptimal path.

Wherein, the path within the original path domain can be adjusted with a K optimal algorithm, that is, priorities are sequentially adjusted from high to low until a disjoint path meeting a disjoint demand is computed out. Since a suboptimal adjustment can be conducted on path segments (including nodes and links) within the original path domain, a success rate of computing the disjoint path during the inter-domain disjoint path computation can be greatly improved.

In step S103, a disjoint path corresponding to the adjusted suboptimal path within the original path domain is recomputed.

Wherein, the adjusted suboptimal path within the original path domain is taken as a disjoint condition, and a disjoint path meeting the disjoint demand is computed within a preset suboptimal priority threshold range with a suboptimal path algorithm.

After the above steps, the method also includes:
after the disjoint path computation of the current domain succeeds, the PCE of the current domain carrying a disjoint path computation result and the adjusted suboptimal path within the original path domain to a head domain via a PCE of an upstream domain through a path computation response; and
after receiving the path computation response, a PCE of the head domain updating an intra-domain path of an original path as the adjusted suboptimal path within the original path domain.

If the original path of the current domain adopts a secret path PathKey, the method also includes:
when computing the disjoint path corresponding to the adjusted suboptimal path within the original path domain, the PCE of the current domain re-generating a new PathKey object pathkey1' for the adjusted suboptimal path within the original path domain, and generating a PathKey object pathkey2 for the computed disjoint path;
then the PCE of the current domain carrying the disjoint path computation result pathkey2 and the pathkey1' of the adjusted suboptimal path within the original path domain or only carrying the disjoint path computation result pathkey2 to the head domain via a PCE of an upstream domain through a path computation response; and
after receiving the path computation response, the PCE of the head domain changing the intra-domain path of the original path from the pathkey1 to the pathkey1', and saving the intra-domain disjoint path of the end-to-end disjoint path as the pathkey2.

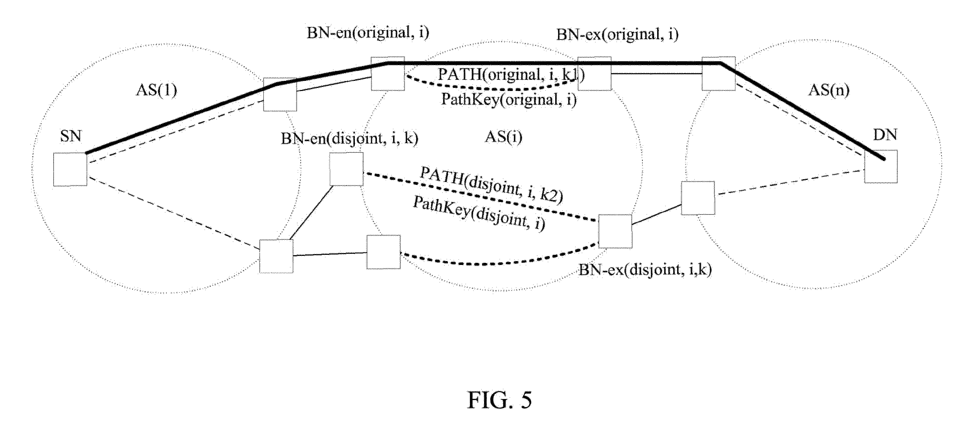

In an application example, as shown in FIG. 5, the communication system gives 3 domains AS(1), AS(i) and AS(n), which represent respectively a head domain AS(1), an intermediate domain AS(i) and a tail domain AS(n) in the inter-domain path computation, each of the three domains has one PCE, which is respectively a PCE(1), a PCE(i) and a PCE(n); SN is a source node, and DN is a destination node.

In order to describe the method for inter-domain disjoint path computation provided in the example, the following appointments are made.
1) PATH(original, i, k1): a path segment of an original path (e.g., a working path) in the AS(i) domain, and it is the k1th optimal path;
2) PATH(disjoint, i, k2): a path segment of a disjoint path (e.g., a protection path) in the AS(i) domain, and it is the k2th optimal path;
3) BN-en(original, i): an ingress boundary node used by the original path in the AS(i) domain;
4) BN-ex(original, i): an egress boundary node used by the original path in the AS(i) domain;
5) BN-en(disjoint, i, k): a kth ingress boundary node used by the disjoint path in the AS(i) domain;
6) BN-ex(disjoint, i, k) a kth egress boundary node used by the disjoint path in the AS(i) domain;
7) PathKey(original, i): a PathKey used by an intra-domain path segment of the original path in the AS(i) domain;
8) PathKey(disjoint, i): a PathKey used by an intra-domain path segment of the disjoint path in the AS(i) domain;
wherein, i, k, k1 and k2 are all natural numbers.

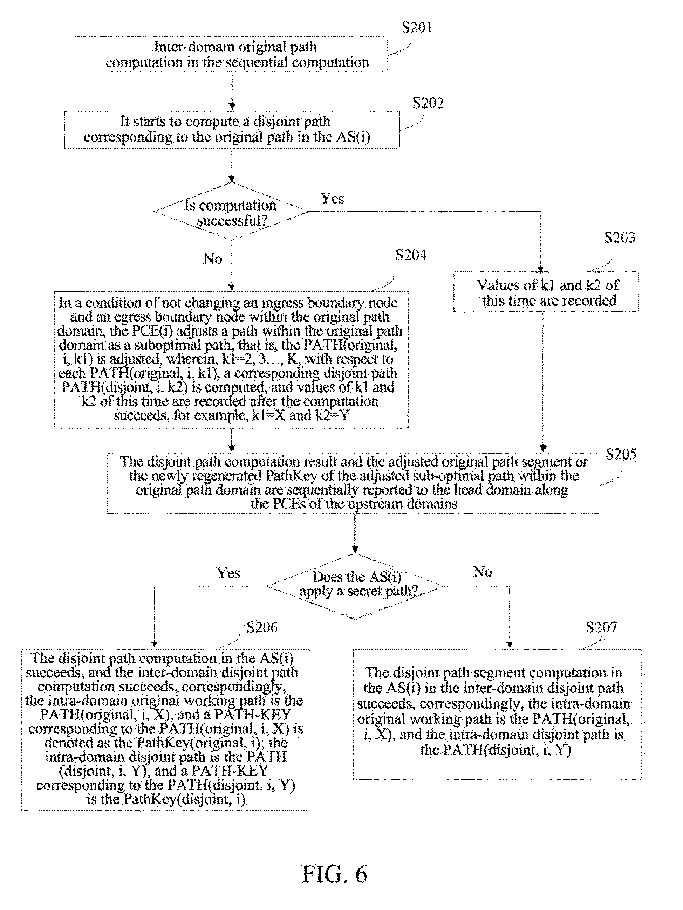

Particularly, as shown in FIG. 6, a disjoint path computation process of the AS(i) is described as follows, and the following steps are included.

In step S201, a inter-domain original path computation in the sequential computation is conducted.

The original path of the current domain (AS(i)) is expressed as a PATH(original, i, k1), and k1=1 is taken, that is, a value of the first optimal path is taken.

In step S202, it starts to compute a disjoint path corresponding to the original path in the AS(i).

Based on the first optimal path PATH(original, i, k1) and k1=1, a corresponding intra-domain disjoint path PATH(disjoint, i, k2) is computed, if the computation fails when k2=1, it continues to compute the k2th (k2=2, 3...) optimal path until a path PATH(disjoint, i, k2) meeting the disjoint demand (node disjoint, link disjoint and SRLG disjoint) is computed out.

In step S203, if the computation succeeds, values of k1 and k2 of this time are recorded, and step S205 is executed, otherwise step S204 is executed.

The steps S201∼S203 are the sequential computation process of the inter-domain disjoint path in the related art, after the computation of the disjoint path corresponding to the original path fails, step S204 is executed with the method of the example of the present invention.

In step S204, in a condition of not changing an ingress boundary node and an egress boundary node within the original path domain, the PCE(i) adjusts a path within the original path domain as a suboptimal path, that is, the PATH(original, i, k1) is adjusted, wherein, k1=2, 3..., K, with respect to each PATH(original, i, k1), a corresponding disjoint path PATH(disjoint, i, k2) is computed, and values of k1 and k2 of this time are recorded after the computation succeeds, for example, k1=X and k2=Y;

### Specifically,

In step A, the PCE(i) adjusts a path within the original path domain as a k1th suboptimal path, that is, the PATH(original, i, k1) is adjusted, k1=2; and a disjoint path corresponding to the k1th suboptimal path is computed;

In step B, it is to compute the disjoint path meeting the disjoint demand with the suboptimal path algorithm, including:
based on the kith suboptimal path PATH(original, i, k1) and k1=2, a corresponding intra-domain disjoint path PATH(disjoint, i, k2) is computed, if the computation fails when k2=1, it continues to compute the k2th (k2=2, 3..., K) suboptimal disjoint path until a path PATH(disjoint, i, k2) meeting the disjoint demand (node disjoint, link disjoint and SRLG disjoint) is computed out, wherein, K is a preset suboptimal priority threshold value, the value can be decided by limitations of the K optimal algorithm itself or be decided by the technician according to efficiency requirements;

In step C, if the computation of the disjoint path with k1=2 still fails based on the kith suboptimal path PATH(original, i, k1), then k1=3, 4, ..., K are taken, a disjoint path corresponding to the k1th suboptimal path is computed, and the above step B of computing the disjoint path is repeated until the disjoint path meeting the disjoint demand is computed out.

In step S205, the disjoint path computation result and the adjusted original path segment or the newly regenerated PathKey of the adjusted sub-optimal path within the original path domain are sequentially reported to the head domain along the PCEs of the upstream domains;

The step S205 is processed according to the following two situations.

### 1) The AS(i) applies a secret path, which is expressed as the PathKey(original, i).

The adjusted original path PATH(original, i, k1) with k1=X within the AS(i) domain which is successfully computed in the disjoint path computation of this time replaces the path segment within the original path domain corresponding to the PATH(original, i, k1) as the PATH(original, i, X) which is updated to the PCE(i), the PathKey(original, i) is not changed, and at this point, the PathKey of the adjusted path within the original path domain is not required to be updated to the head domain;
or, a new PathKey object is regenerated for the adjusted suboptimal path within the original path domain, it is denoted as a new PathKey(original, i) and carried in a disjoint path computation response to notify the head domain AS(1), and the AS(1) replaces the PathKey of corresponding path segments of the original path, and updates to the PCE(1);
meanwhile, the successfully computed disjoint path PATH(disjoint, i, k2) with k2=Y of this time is saved in the PCE(i), a PathKey object corresponding to the PATH(disjoint, i, k2) is generated and denoted as a PathKey(disjoint, i), and step S206 is executed.

### 2) The AS(i) does not apply a secret path.

The adjusted original path PATH(original, i, k1) with k1=X within the AS(i) domain which is successfully computed in the disjoint path computation of this time replaces the path segment within the original path domain corresponding to the PATH(original, i, k1) as the PATH(original, i, X) which is updated to the PCE(i), the PATH(original, i, X) is carried in a disjoint path computation response to notify the head domain AS(1), and the AS(1) performs a replacement of corresponding path segments of the original path, and updates to the PCE(1); meanwhile, the successfully computed disjoint path PATH(disjoint, i, k2) with k2=Y of this time is saved in the PCE(i), and step S207 is executed.

In step S206, the disjoint path segment computation in the AS(i) in the inter-domain disjoint path succeeds, and the inter-domain disjoint path computation succeeds, correspondingly, the intra-domain original working path is the PATH(original, i, X), and a PATH-KEY corresponding to the PATH(original, i, X) is denoted as the PathKey(original, i); the intra-domain disjoint path is the PATH(disjoint, i, Y), and a PATH-KEY corresponding to the PATH(disjoint, i, Y) is the PathKey(disjoint, i).

In step S207, the disjoint path segment computation in the AS(i) in the inter-domain disjoint path succeeds, correspondingly, the intra-domain original working path is the PATH(original, i, X), and the intra-domain disjoint path is the PATH(disjoint, i, Y).

Furthermore, the application scenario of the example is a situation that signaling has not been established in the end-to-end original path, that is, a possibility that routing can be adjusted still exists, thus the method of the example of the present invention is applicable to all inter-domain routing algorithms that support such scenario, such as the Backward Recursive Path Computation (BRPC) method. Moreover, the method provided in the example of the present invention is also applicable in computation scenarios based on secret paths or not based on secret paths.

Sequentially computing the disjoint path with the BRPC algorithm is taken as an example below, to specifically describe how to use the method of the example to conduct the sequential computation of the disjoint path in three conditions: without the secret path, with the secret path and not updating to the head domain, with the secret path and updating to the head domain.

### Application Example 1: Sequential computation process of the disjoint path based on the BRPC (without the secret path)

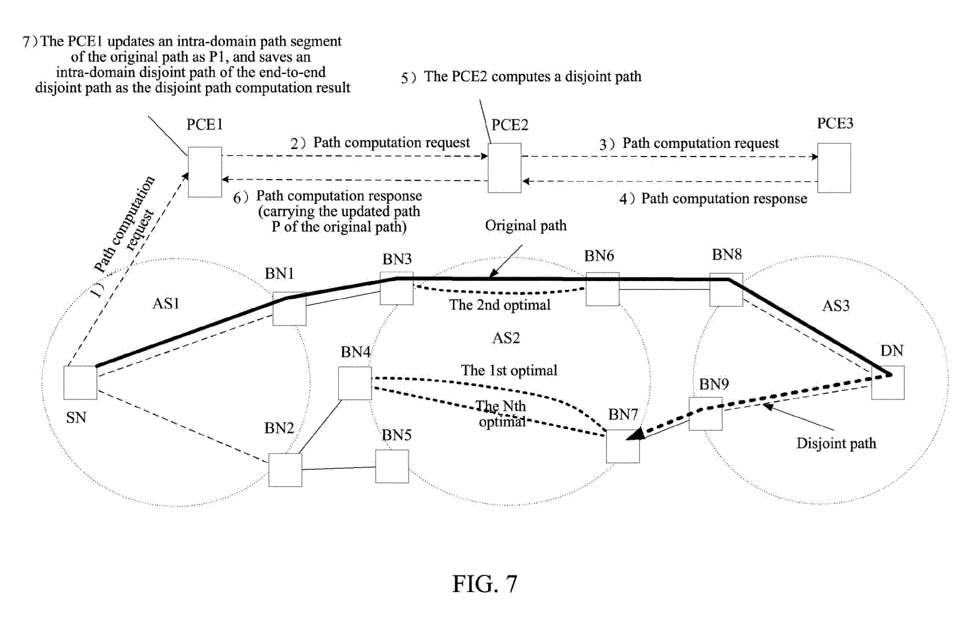

In FIG. 7, three ASs (AS1, AS2, AS3) and three PCEs (PCE1, PCE2, PCE3) are given. BN1∼BN9 are boundary nodes of the domains, SN is a source node, and DN is a destination node. Wherein a solid line is an original path, such as a working path, a solid line between BN3-BN6 is a path segment of the original path within the AS2 domain and it is expressed as P, and a dotted line between BN3-BN6 is a suboptimal path. With respect to different ingress boundary nodes BN4 and BN5, the shortest paths respectively from the BN4 and the BN5 to the BN7 are computed as the disjoint paths. A domain sequence used in the disjoint path computation is the same as that in the original path computation, it is AS1 → AS2 → AS3, and a PCE sequence is selected as PCE1→PCE2→PCE3. The computation process is described as follows:
(1) The SN side starts to send a path computation request to the PCE1.
(2) The PCE1 forwards the path computation request message to the PCE2 of the downstream domain AS2 according to an appointment of the domain sequence.
(3) The PCE2 then forwards the path computation request to the PCE3.
(4) The PCE3 carries a disjoint path computation result of the AS(3) to the PCE2 through a path computation request response.
(5) The PCE2 takes the BN3-BN6 path segment (P) of the original path as a disjoint condition, computes the disjoint path, and with respect to different ingress boundary nodes BN4 and BN5, computes the shortest paths respectively from the BN4 and the BN5 to the BN7, and starts to compute from the first optimal path.
   If available disjoint paths cannot be computed for both the BN4 and the BN5, that is, the disjoint path computation of the current domain fails, the path segment of BN3-BN6 is adjusted as a suboptimal path segment (P1) at this point, and based on this new original path segment PI, it is to continue to compute the disjoint paths from the BN4 and the BN5 to the BN7; and
   if at least one of the disjoint paths with the BN4 and the BN5 being start nodes is computed successfully, the PCE2 starts to construct a path computation result of the current domain, and continues to carry the path computation result and the updated original path segment P1 to the PCE of the upstream domain through a path computation response.
(6) The PCE2 sends a disjoint path computation response to the PCE1, wherein the disjoint path computation response carries a disjoint path computation result and the updated path P1 of the original path.
(7) The PCE1 receives the path computation response, and updates an intra-domain path segment of the original path as the PI, and saves an intra-domain disjoint path of the end-to-end disjoint path as the disjoint path computation result.

So far, the inter-domain disjoint path computation succeeds.

### Application Example 2: Sequential computation process of the disjoint path based on the BRPC (with the secret path and not updating to the head domain)

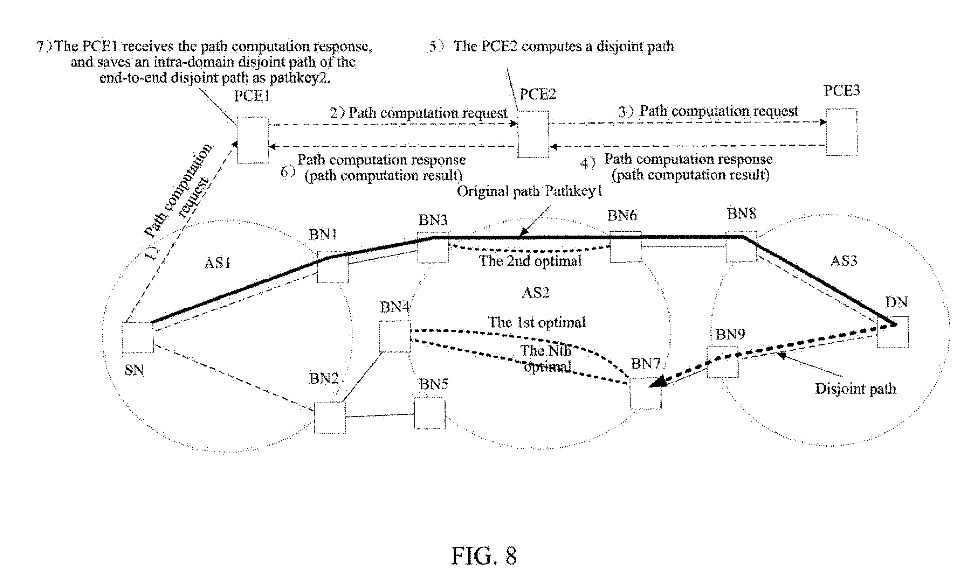

In FIG. 8, three ASs (AS1, AS2, AS3) and three PCEs (PCE1, PCE2, PCE3) are given. BN1∼BN9 are boundary nodes of the domains, SN is a source node, and DN is a destination node. Wherein a solid line is an original path, such as a working path, a solid line between BN3-BN6 is a path segment of the original path within the AS2 domain and it is expressed as pathkey1, and a dotted line between BN3-BN6 is a suboptimal path. With respect to different ingress boundary nodes BN4 and BN5, the shortest paths respectively from the BN4 and the BN5 to the BN7 are computed as the disjoint paths. A domain sequence used in the disjoint path computation is the same as that in the original path computation, it is AS1→AS2→AS3, and a PCE sequence is selected as PCE1→PCE2→PCE3. The computation process is described as follows:
(1) The SN side starts to send a path computation request to the PCE1.
(2) The PCE1 forwards the path computation request message to the PCE2 of the downstream domain AS2 according to an appointment of the domain sequence.
(3) The PCE2 then forwards the path computation request to the PCE3.
(4) The PCE3 carries a disjoint path computation result of the AS(3) to the PCE2 through a path computation response.
(5) The PCE2 takes the BN3-BN6 path segment (pathkey1) of the original path as a disjoint condition, computes the disjoint path, and with respect to different ingress boundary nodes BN4 and BN5, computes the shortest paths respectively from the BN4 and the BN5 to the BN7, starting to compute from the first optimal path.
   If available disjoint paths cannot be computed for both the BN4 and the BN5, that is, the disjoint path computation of the current domain fails, the path segment of BN3-BN6 is adjusted as a suboptimal path at this point, and based on this new original path segment, it is to continue to compute the disjoint paths from the BN4 and the BN5 to the BN7; and
   if at least one of the disjoint paths with the BN4 and the BN5 being start nodes is computed successfully, the PCE2 starts to construct a path computation result of the current domain, generates a PathKey object for the computed disjoint path, which is denoted as pathkey2; and updates the present suboptimal path segment namely the BN3-BN6 path segment of the original path to the pathkey1 of the PCE2 in the meantime.
(6) The PCE2 sends a path computation response to the PCE1, wherein the path computation response carries the disjoint path computation result.
(7) The PCE1 receives the path computation response, and saves an intra-domain disjoint path of the end-to-end disjoint path as the pathkey2.

The inter-domain disjoint path computation succeeds.

### Application Example 3: Sequential computation process of the disjoint path based on the BRPC (with the secret path and updating to the head domain)

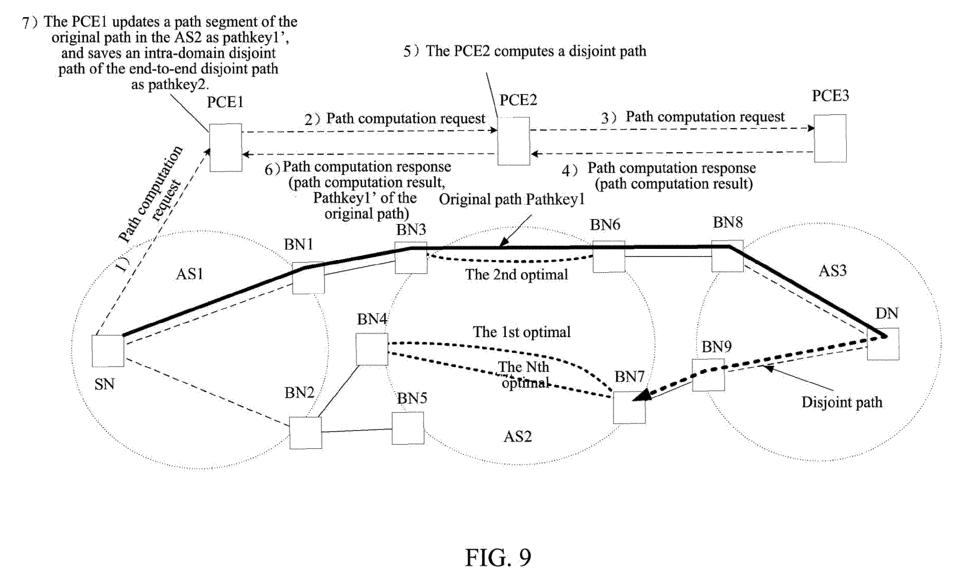

In FIG. 9, three ASs (AS1, AS2, AS3) and three PCEs (PCE1, PCE2, PCE3) are given. BN1∼BN9 are boundary nodes of the domains, SN is a source node, and DN is a destination node. Wherein a solid line is an original path, such as a working path, a solid line between BN3-BN6 is a path segment of the original path within the AS2 domain and it is expressed as pathkey1, and a dotted line between BN3-BN6 is a suboptimal path. With respect to different ingress boundary nodes BN4 and BN5, the shortest paths respectively from the BN4 and the BN5 to the BN7 are computed as the disjoint paths. A domain sequence used in the disjoint path computation is the same as that in the original path computation, it is AS1→AS2→AS3, and a PCE sequence is selected as PCE1→PCE2→PCE3. The computation process is described as follows:
(1) The SN side starts to send a path computation request to the PCE1.
(2) The PCE1 forwards the path computation request message to the PCE2 of the downstream domain AS2 according to an appointment of the domain sequence.
(3) The PCE2 then forwards the path computation request to the PCE3.
(4) The PCE3 carries a disjoint path computation result of the AS(3) to the PCE2 through a path computation response.
(5) The PCE2 takes the BN3-BN6 path segment (pathkey1) of the original path as a disjoint condition, computes the disjoint path, and with respect to different ingress boundary nodes BN4 and BN5, computes the shortest paths respectively from the BN4 and the BN5 to the BN7, and starts to compute from the first optimal path.
   If available disjoint paths cannot be computed for both the BN4 and the BN5, that is, the disjoint path computation of the current domain fails, the path segment of BN3-BN6 is adjusted as a suboptimal path at this point, and based on this new original path segment, it is to continue to compute the disjoint paths from the BN4 and the BN5 to the BN7; and
   if at least one of the disjoint paths with the BN4 and the BN5 being start nodes is computed successfully, the PCE2 starts to construct a path computation result of the current domain, generates a PathKey object for the computed disjoint path, which is denoted as pathkey2; and meanwhile regenerates a new PathKey object for the present suboptimal path segment namely the BN3-BN6 path segment of the original path, which is denoted as pathkey1'.
(6) The PCE2 sends a path computation response to the PCE1, wherein the path computation response carries the disjoint path computation result and the pathkey1' of the updated path of the original path.
(7) The PCE1 receives the path computation response, changes an intra-domain path segment of the original path from the pathkey1 to the pathkey1', and saves an intra-domain disjoint path of the end-to-end disjoint path as the pathkey2.

So far, the inter-domain disjoint path computation succeeds.

As can be seen from the above examples, compared with the related art, with the method, path computation element PCE and communication system for inter-domain disjoint path computation provided in the above examples, based on the existing sequential computation method for the inter-domain path, a suboptimal adjustment is conducted on path segments (including nodes and links) within the original path domain, thereby greatly improving a success rate of computing the disjoint path during the inter-domain disjoint path computation.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

It should be noted that the present invention can still have other various examples, the skilled familiar to the art can make various corresponding changes and transformations according to the present invention without departing from the spirit and essence of the present invention, and these corresponding changes and transformations shall all fall into the protection scope of the appended claims of the present invention.

### Industrial Applicability

Compared with the related art, with the method, path computation element and communication system for inter-domain disjoint path computation provided in the embodiment of the present invention, based on the existing sequential computation method for the inter-domain path, a suboptimal adjustment is conducted on path segments (including nodes and links) within the original path domain, thereby greatly improving a success rate of computing the disjoint path during the inter-domain disjoint path computation.

## Claims

1. A method for inter-domain disjoint path computation, comprising:
in a sequential computation process of a inter-domain disjoint path, if a disjoint path computation of a current domain fails, in a condition of not changing an ingress boundary node and an egress boundary node within an original path domain, a Path Computation Element (PCE) of the current domain adjusting a path within the original path domain as a suboptimal path, and recomputing a disjoint path corresponding to the adjusted suboptimal path within the original path domain.

2. The method according to claim 1, wherein:
recomputing the disjoint path corresponding to the adjusted suboptimal path within the original path domain comprises:
taking the adjusted suboptimal path within the original path domain as a disjoint condition, and computing a disjoint path meeting a disjoint demand within a preset suboptimal priority threshold range with a suboptimal path algorithm.

3. The method according to claim 2, wherein:
the PCE adjusting the path within the original path domain as the suboptimal path, and recomputing the disjoint path corresponding to the adjusted suboptimal path within the original path domain specifically comprises:
the PCE adjusting the path within the original path domain as a k1th suboptimal path, wherein k1=2; and computing a disjoint path corresponding to the k1th suboptimal path;
computing the disjoint path meeting the disjoint demand with the suboptimal path algorithm comprises: starting to compute a disjoint path from a suboptimal priority k2=1, if the computation fails, continuing to compute disjoint paths of suboptimal priorities k2=2, 3, ......, K until a disjoint path meeting the disjoint demand is computed out; wherein K is a preset suboptimal priority threshold value and is a positive integer; and
if the computation still fails, taking k1=3, 4, ......, K, computing a disjoint path corresponding to the k1th suboptimal path, and repeating the above step of computing the disjoint paths until the disjoint path meeting the disjoint demand is computed out.

4. The method according to claim 1 or 2 or 3, further comprising:
after the disjoint path computation of the current domain succeeds, the PCE of the current domain carrying a disjoint path computation result and the adjusted suboptimal path within the original path domain to a head domain via a PCE of an upstream domain through a path computation response; and
after receiving the path computation response, a PCE of the head domain updating an intra-domain path of an original path as the adjusted suboptimal path within the original path domain, and saving an intra-domain disjoint path of an end-to-end disjoint path as the disjoint path computation result.

5. The method according to claim 1 or 2 or 3, wherein:
if the original path of the current domain adopts a secret path, pathkey1, the method further comprises:
when computing the disjoint path corresponding to the adjusted suboptimal path within the original path domain, the PCE of the current domain re-generating a new PathKey object pathkey1' for the adjusted suboptimal path within the original path domain, and generating a PathKey object pathkey2 for the computed disjoint path;
then the PCE of the current domain carrying the disjoint path computation result pathkey2 and the pathkey1' of the adjusted suboptimal path within the original path domain to the head domain via a PCE of an upstream domain through a path computation response; and
after receiving the path computation response, the PCE of the head domain updating the intra-domain path of the original path as the pathkey1', and saving the intra-domain disjoint path of the end-to-end disjoint path as the pathkey2.

6. The method according to claim 1 or 2 or 3, wherein:
if the original path of the current domain adopts a secret path, pathkey1, the method further comprises:
when computing the disjoint path corresponding to the adjusted suboptimal path within the original path domain, the PCE of the current domain updating a PathKey of the adjusted suboptimal path within the original path domain as the pathkey1, and generating a PathKey object pathkey2 for the computed disjoint path;
then the PCE of the current domain carrying the disjoint path computation result pathkey2 to the head domain via a PCE of an upstream domain through a path computation response; and
after receiving the path computation response, the PCE of the head domain saving the intra-domain disjoint path of the end-to-end disjoint path as the pathkey2.

7. A path computation element for a inter-domain disjoint path, comprising:
a monitoring module, configured to: in a sequential computation process of the inter-domain disjoint path, monitor whether a disjoint path computation of a current domain fails, and if yes, notify a path adjustment module;
the path adjustment module, configured to: after receiving a notification from the monitoring module, in a condition of not changing an ingress boundary node and an egress boundary node within an original path domain, adjust a path within the original path domain as a suboptimal path; and
a disjoint path computation module, configured to: recompute a disjoint path corresponding to the adjusted suboptimal path within the original path domain.

8. The path computation element according to claim 7, wherein:
the disjoint path computation module being configured to recompute the disjoint path corresponding to the adjusted suboptimal path within the original path domain comprises:
taking the adjusted suboptimal path within the original path domain as a disjoint condition, and computing a disjoint path meeting a disjoint demand within a preset suboptimal priority threshold range with a suboptimal path algorithm.

9. The path computation element according to claim 8, wherein:
the path adjustment module being configured to adjust the path within the original path domain as the suboptimal path comprises:
adjusting the path within the original path domain as a k1th suboptimal path, wherein k1=2; notifying the disjoint path computation module to compute a disjoint path corresponding to the k1=2nd suboptimal path; if a computation failure response returned by the disjoint path computation module is received, taking k1=3, 4, ......, K, and notifying the disjoint path computation module to compute disjoint paths corresponding to the k1=3, 4, ......, Kth suboptimal paths until a disjoint path meeting the disjoint demand is computed out, wherein, K is a preset suboptimal priority threshold value and is a positive integer; and
the disjoint path computation module being configured to compute the disjoint path corresponding to the k1th suboptimal path after receiving a notification from the path adjustment module comprises:
computing the disjoint path meeting the disjoint demand with the suboptimal path algorithm, comprising: starting to compute a disjoint path from a suboptimal priority k2=1, if the computation fails, continuing to compute disjoint paths of suboptimal priorities k2=2, 3, ......, K, and if the computation still fails, returning a computation failure response to the path adjustment module.

10. The path computation element according to claim 7 or 8 or 9, further comprising:
a path reporting module, configured to: after the disjoint path computation of the current domain succeeds, carry a disjoint path computation result and the adjusted suboptimal path within the original path domain to a head domain via a path computation element PCE of an upstream domain through a path computation response; and
a path update module, configured to: after receiving the path computation response in the head domain, update an intra-domain path of an original path as the adjusted suboptimal path within the original path domain, and save an intra-domain disjoint path of an end-to-end disjoint path as the disjoint path computation result.

11. The path computation element according to claim 7 or 8 or 9, further comprising:
the path reporting module, configured to: if the original path of the current domain adopts a secret path pathkey1, when computing the disjoint path corresponding to the adjusted suboptimal path within the original path domain in the current domain, re-generate a new PathKey object pathkey1' for the adjusted suboptimal path within the original path domain, and generate a PathKey object pathkey2 for the computed disjoint path; then carry the disjoint path computation result pathkey2 and the pathkey1' of the adjusted suboptimal path within the original path domain to the head domain via a path computation element PCE of an upstream domain through a path computation response; and
the path update module, configured to: after receiving the path computation response in the head domain, change the intra-domain path of the original path from the pathkey1 to the pathkey1', and save the intra-domain disjoint path of the end-to-end disjoint path as the pathkey2.

12. The path computation element according to claim 7 or 8 or 9, further comprising:
a path reporting module, configured to: if the original path of the current domain adopts a secret path pathkey1, when computing the disjoint path corresponding to the adjusted suboptimal path within the original path domain in the current domain, update the adjusted suboptimal path within the original path domain to the pathkey1, and generate a PathKey object pathkey2 for the computed disjoint path; and then carry the disjoint path computation result pathkey2 to the head domain via a path computation element PCE of an upstream domain through a path computation response; and
a path update module, configured to: after receiving the path computation response in the head domain, save the intra-domain disjoint path of the end-to-end disjoint path as the pathkey2.

13. A communication system, comprising: two or more than two Autonomous System (AS) domains and the path computation elements for the inter-domain disjoint path according to claims 7∼12, wherein, each AS domain has one path computation element.
